# EUROPÄISCHE PATENTANMELDUNG

(11) **EP 4 278 890 A1**
(43) Veröffentlichungstag der Anmeldung: **22.11.2023**
(21) Anmeldenummer: 23166089.5
(22) Anmeldetag: 31.03.2023
(51) Int. Cl.: A01G 13/02

(54) **PFLANZENSCHUTZ**

(30) Priorität: 12.04.2022 AT 502352022
(71) Anmelder: WITASEK Pflanzenschutz GmbH, 9560 Feldkirchen (Ktn.) (AT); FunderMax GmbH, 9300 St. Veit/Glan (AT)
(72) Erfinder: WITASEK, Peter, 9560 Feldkirchen (Ktn.) (AT); SEEBACHER, Michael, 9300 St. Veit an der Glan (AT); REICHMANN, Günter, 9300 St. Veit an der Glan (AT)
(74) Vertreter: Beer & Partner Patentanwälte KG

(57) **Zusammenfassung**

Ein Pflanzenschutz (1) umfasst vier Wandteile (2, 3 und 4), die miteinander zu einer Röhre (5) mit der Form des Mantels eines Prismas verbunden sind. Dabei sind bis auf eine Kante des Pflanzenschutzes 1 die Wandteile (2, 3 und 4) miteinander so verbunden, dass die Wandteile (2, 3 und 4) relativ zueinander schwenkbar sind, um die Röhre (5) zu bilden. Die in der anderen Kante des Pflanzenschutzes (1) aneinandergrenzenden, zunächst noch nicht miteinander verbundenen Ränder der Wandteile (2 und 4) sind miteinander mit Hilfe von Steckverbindungen (10) verbunden.

## Beschreibung

Die Erfindung betrifft einen Pflanzenschutz mit den Merkmalen des einleitenden Teils von Anspruch 1.

Ein Pflanzenschutz in Form von Pflanzenschutzhüllen oder -röhren ist in verschiedenen Ausführungsformen bekannt.

Aus AT 005 520 U1, AT 11 447 U1, AT 13 572 U1, EP 2 532 225 A1 (= AT 12 562 U1), EP 2 324 699 A1 (= AT 1 447 U1) oder DE 10 2007 030 888 U1 sind Pflanzenschutzhüllen mit im Wesentlichen quadratischer Querschnittsform bekannt. In den bekannten Pflanzenschutzhüllen sind auch Löcher vorgesehen.

Pflanzenschutzhüllen in Form geschlossener Röhren aus Kunststoff mit im Wesentlichen kreisrunder Querschnittsform sind beispielsweise aus GB 2 442 333 A1 oder EP 2 368 422 A2 (= AT 11 667 U1) bekannt. Auch die runden Pflanzenschutzhüllen haben Löcher.

Aus AT 13 424 U1 ist eine Pflanzenschutzhülle bekannt, die aus einem Zuschnitt aus Kunststoff besteht, der zu einer Röhre mit im Wesentlichen quadratischer Querschnittsform schließbar ist.

Eine weitere Pflanzenschutzhülle ist aus AT 16 701 U2 bekannt.

Diese bekannten Pflanzenschutzhüllen bestehen überwiegend aus Kunststoff, beispielsweise in Form von Doppelstegplatten.

Bekannt sind auch Pflanzenschutzhüllen, die aus Karton bestehen. Nachteilig bei aus Karton bestehenden, an sich umweltfreundlichen, Schutzhüllen ist es, dass sich diese Schutzhüllen unter der Einwirkung von Nässe (Regen, Tau oder schmelzender Schnee) aufweichen und zerfallen, so dass die Schutzwirkung dann nicht mehr gegeben ist.

EP 2 476 306 A2 zeigt und beschreibt eine Pflanzenschutzhülle, die aus schraubenlinienförmig gewundenen Lagen aus Karton, die mit einem speziellen Kleber ("penetrating paper converting adhesive") miteinander verbunden sind, besteht. Schichten des Kartons können mit einem Biozid getränkt sein. Erwähnt ist, dass die Schutzhülle mit Wachs oder Acryl behandelt sein kann, um sie wetterbeständig zu machen.

GB 2 290 691 A offenbart eine Pflanzenschutzhülle aus wenigstens zwei schraubenlinienförmig gewundenen Lagen aus Karton, wobei wenigstens eine der Lagen behandelt wurde, um die Nassfestigkeit und die Wasserbeständigkeit zu verbessern.

Eine biologisch abbaubare Wuchshülle soll gemäß EP 3 146 835 A1 zur Gänze aus vollständig biologisch abbaubarem Material bestehen und kann Öffnungen aufweisen. Als Werkstoff für die Hülle wird ein kompostierbarer Kunststoffcompound aus dem Kunststoff Ecoflex und Polymilchsäure erwähnt. Vorgeschlagen wird, dass die Schutzhülle aus einer Kombination von unterschiedlichen Werkstoffen besteht. Dabei ist erwähnt, dass die Wuchshülle alternativ aus Kartonmaterial gefertigt sein kann.

Aus AT 523 044 B1 ist eine Schutzhülle bekannt, die als Pflanzenschutzhülle bestimmt ist, und wenigstens eine Lage aus Karton und wenigstens auf ihrer Außenseite wenigstens eine Lage aus Biokunststoff umfasst. Die Lage aus Karton kann ein schraubenlinienförmiger Streifen aus Karton sein, so dass die Schutzhülle eine Wickelröhre ist. Dabei sind zwischen den einzelnen Windungen des Streifens aus Karton Öffnungen bildende Freiräume vorgesehen, die von der wenigstens auf der Außenseite der Schutzhülle angeordneten Lage aus Kunststoff überdeckt sind.

US 2018/0084739 A1 zeigt einen Pflanzenschutz, der aus zwei oder mehr als zwei Wandteilen besteht, wobei die Wandteile rechteckig und gekrümmt sind und mit einander über wenigstens ein biegbares Gelenk verbunden sind. Zum Schließen der Röhre sind reibschlüssige Steckverbindungen vorgesehen. Für den bekannten Pflanzenschutz sind auch biologisch abbaubare Werkstoffe erwähnt. Kunststoff (Polypropylen) ist als bevorzugter Werkstoff genannt. Ein Pflanzenstab ist im Inneren des Pflanzenschutzes angeordnet, wobei der Pflanzenschutz einfach über den Pflanzenstab gesteckt ist. Irgendwelche Maßnahmen den Pflanzenschutz an dem Pflanzenstab zu sichern, sind nicht vorgesehen.

DE 20 2013 100 596 U1 offenbart eine Pflanzenschutzhülle aus Kunststoff, die aus einem einteiligen Zuschnitt gebildet ist. Zum Schließen des Zuschnittes zu einer Röhre sind Laschen und Löcher umfassende Steckverbindungen vorgesehen. Der Zuschnitt soll entlang der Kanten der Röhre abgewinkelt werden. Die vier Wandteile sind rechteckig und eben.

Gezeigt und beschrieben ist in EP 3 788 869 A1 eine Wuchshülle aus durchscheinender Wellpappe, die aus einem Zuschnitt besteht. Die Wandteile sind eben und im Wesentlichen rechteckig und entweder eben oder gekrümmt. Der Zuschnitt wird durch Verkleben von einander überlappenden Enden oder durch andere Mittel zu einer Röhre geschlossen. Die bekannte Wuchshülle weist durch Einstülpungen gebildete Halterungen für einen Pflanzstab auf. Der Werkstoff der Wuchshülle soll umweltverträglich sein.

EP 0 230 767 A1 offenbart eine Schutzhülle aus extrudiertem Polypropylen in Form eines mehrseitigen Prismas. Die Wandteile sind eben und rechteckig. Geschlossen wird die Hülle, indem zwei endständige Wandteile einander überlappend und aufeinanderliegend gesichert werden. Die Sicherung kann Verschlussstücke, die durch Öffnungen gesteckt und mit einer Schnur gesichert sind, umfassen. Auch eine Sicherung in Form einer Kunststoffschnur (nach Art eines Kabelbinders) ist gezeigt. Die Sicherung kann auch dazu dienen, die Schutzhülle an einem außen- oder innenstehenden Stab festzulegen.

WO 2020/225402 A1 offenbart einen Pflanzenschutz in Form einer Röhre (zylindrisch oder prismatisch), die aus zwei Wandteilen zusammengesetzt sein kann. Als Werkstoff für den Pflanzenschutz sind u.a. Holzschnitzel, Holzmehl mit Bindemittel erwähnt. (Seite 1 unten bis Seite 2 oben).

Nachteilig bei den bekannten, als Pflanzenschutz dienenden Hüllen oder Röhren ist es, dass diese nicht ohne Kunststoff auskommen und oft wenig stabil sind, so dass der bekannte Pflanzenschutz durch Witterungseinflüsse und/oder Tiere leicht beschädigt werden kann. Das hat häufig zur Folge, dass der Pflanzenschutz die ihm zugeordnete Aufgabe nicht mehr erfüllen kann und überdies oft durch Luftbewegungen vertragen wird.

Der Erfindung liegt die Aufgabe zu Grunde, einen Pflanzenschutz zur Verfügung zu stellen, der die beschriebenen Nachteile nicht aufweist und dennoch eine gute Schutzwirkung entfaltet, einfach handzuhaben und nicht teuer ist.

Gelöst wird diese Aufgabe mit einem Pflanzenschutz, der die Merkmale von Anspruch 1 aufweist.

Bevorzugte und vorteilhafte Ausführungsformen des erfindungsgemäßen Pflanzenschutzes sind Gegenstand der Unteransprüche.

Da der erfindungsgemäße Pflanzenschutz plattenförmige Wandteile umfasst, die miteinander zu der Röhre des Pflanzenschutzes verbunden sind, können die Wandteile stabil sein und einfach zu der gewünschten Form der Röhre des Pflanzenschutzes zusammengesetzt werden.

Dabei ist die Erfindung nicht auf einen bestimmten Werkstoff der plattenförmigen Wandteile und anderer Bestandteile des erfindungsgemäßen Pflanzenschutzes beschränkt, wenngleich als Werkstoff ein gut umweltverträglicher Werkstoff bevorzugt ist. Beispielsweise ist der Werkstoff ein Werkstoff auf Basis von Naturfasern, wie Pflanzenfasern, Holzfasern und/oder Holzspänen, wobei die Wandteile und bevorzugt auch die anderen Bestandteile des erfindungsgemäßen Pflanzenschutzes aus mit oder ohne Zusatz von Bindemittel verpressten Naturfasern, wie mit oder ohne Bindemittel verpressten Holzfasern und/oder Holzspänen, bestehen.

Wenn die Naturfasern, wie Holzfasern und/oder Holzspäne mit Zusatz eines Bindemittels verpresst werden, wird bevorzugt ein Bindemittel verwendet, das biologisch unbedenklich und insbesondere biologisch abbaubar ist.

Beispiele für im Rahmen der Erfindung verwendbare Bindemittel sind Harnstoff-Harze, Melamin-Harze, Phenol-Harze oder Resorcin-Harze.

Beispiele für im Rahmen der Erfindung bevorzugt verwendbare Bindemittel sind lösungsmittelfreie Bindemittel, die im ausgehärteten Zustand biologisch unbedenklich sind, beispielsweise Polyurethane oder Epoxid-Harze.

Beispiele für im Rahmen der Erfindung verwendbare biologisch abbaubare Bindemittel sind Glutinleime, stärkebasierte Leime und proteinbasierte Leime, wie Caseinleim.

Bevorzugt ist es im Rahmen der Erfindung, Naturfasern, wie Holzfasern und/oder Holzspäne, bindemittelfrei zu plattenförmigen Wandteilen und anderen Bestandteilen des erfindungsgemäßen Pflanzenschutzes zu verpressen.

Unter dem hier verwendeten Begriff "Holzfasern" werden bevorzugt verstanden: Späne (Normalspäne) mit einer Länge von 5 bis 10 mm und einer Dicke von 0,2 bis 0,3 mm, Feinstspäne mit einer Länge von 3 bis 6 mm und mit einer Dicke von 0,1 bis 0,25 mm, gering zerfaserte Faserspäne mit einer Länge von 1 bis 6 mm und mit einer Dicke von 0,1 bis 0,25 mm, stark zerfaserte Faserspäne mit einer Länge von 1 bis 6 mm und mit einer Dicke von 0,08 bis 0,2 mm sowie Holz-Schleifstaub mit Abmessungen von 0,4 bis 0,6 mm.

Beispielsweise enthalten die plattenförmigen Wandteile und weitere Bestandteile des erfindungsgemäßen Pflanzenschutzes Nadelholzfasern, beispielsweise Fasern der Fichte, mit einer Länge von 3 bis 6 mm und/oder Hartholzfasern, beispielsweise Fasern der Buche oder der Eiche, mit einer Länge von 1 bis 1,5 mm.

Im Rahmen der Erfindung sind auch Mischungen aus wenigstens zwei der vorgenannten Arten von Naturfasern in Betracht gezogen.

Beispielsweise enthalten die plattenförmigen Wandteile und vorzugsweise weitere Bestandteile des erfindungsgemäßen Pflanzenschutzes zusätzlich zu Nadelholzfasern, wie Fasern der Fichte, bis zu 50 Gew.% Hartholzfasern, wie Fasern der Buche oder Eiche.

In einer beispielhaften Ausführungsform des erfindungsgemäßen Pflanzenschutzes enthalten die plattenförmigen Wandteile und vorzugsweise weitere Bestandteile des erfindungsgemäßen Pflanzenschutzes 33 Gew.% (ein Drittel) Hartholzfasern (beispielsweise Buche oder Eiche) und 67 Gew.% (zwei Drittel) Nadelholzfasern (beispielsweise Fichte).

Die im Rahmen der Erfindung bevorzugt in Betracht gezogenen, plattenförmigen Wandteile aus Naturfasern, wie Holzfasern und/oder Holzspänen, die mit oder ohne Zusatz von Bindemittel verpresst sind, können eine Wandstärke (= Dicke) von 1,0 bis 5,0 mm, bevorzugt 2,0 mm, aufweisen.

Der Werkstoff der plattenförmigen Wandteile aus Naturfasern, wie Holzfasern und/oder Holzspänen, die mit oder ohne Zusatz von Bindemittel verpresst sind, kann ein Raumgewicht von 450,0 bis 1200,0 kg/m³, bevorzugt im Bereich von 950 kg/m³, haben.

Diese Werkstoffeigenschaften gelten bevorzugt auch für die anderen Bestandteile des erfindungsgemäßen Pflanzenschutzes.

Das Verbinden von Wandteilen zu einem Pflanzenschutz in Form einer Röhre kann beispielsweise unter Verwenden von Klebestreifen, insbesondere Klebestreifen aus Papier, von an den Rändern aneinandergrenzender Wandteile befestigten, beispielsweise angenähten, angeklebten oder mit Heftklammern fixierten, Textilbändern, wie Gewebebändern oder Filzbändern, von Nähten, wie Zick-Zack-Nähten, oder von Metallklammer in Kombination mit wenigstens einer schließbaren Verbindung, wie einer Steckverbindung, erfolgen.

Die erwähnten Möglichkeiten, Wandteile des erfindungsgemäßen Pflanzenschutzes miteinander durch Textilbänder, Nähte, Metallklammern oder Klebestreifen zu verbinden, ergeben eine biegbare Verbindung aneinandergrenzender Wandteile, auch wenn die Wandteile beim Verbinden mit ihren Rändern unmittelbar aneinander anliegen. Dies hat den vorteilhaften Effekt, dass miteinander verbundene Wandteile durch Biegen im Bereich aneinandergrenzender Ränder von Wandteilen zu einer Röhre verformt werden können und dass die Röhre durch Verbinden der endständigen Ränder geschlossen werden kann.

Bevorzugt ist im Rahmen der Erfindung, dass aneinandergrenzende Ränder der plattenförmigen Wandteile mit Ausnahme eines Paares aneinandergrenzender Ränder der plattenförmigen Wandteile miteinander mit Hilfe der genannten Verbindungsmittel (Klebebänder, Textilbänder, Nähte oder Metallklammern) verbunden werden. Die noch nicht miteinander verbundenen Ränder der Wandteile können miteinander auf beliebige Art und Weise, insbesondere durch wenigstens eine Steckverbindung, verbunden werden.

Diese Ausführungsform erlaubt es, beispielsweise vier, Wandteile miteinander, wie zuvor beschrieben, zu verbinden, die so miteinander verbundenen Wandteile zu einer Röhre zu formen und die Röhre zu schließen.

Bevorzugt ist in Betracht gezogen, dass zum Verbinden von Paaren aneinandergrenzender Ränder der plattenförmigen Wandteile mit Ausnahme eines Paares aneinandergrenzender Ränder der plattenförmigen Wandteile Klebestreifen, Textilbänder, Nähte oder Metallklammern verwendet werden. Die nicht miteinander verbundenen Ränder der Wandteile können miteinander beispielsweise und bevorzugt mit Hilfe wenigstens einer Steckverbindung verbunden werden.

Diese Ausführungsform erlaubt es, beispielsweise vier, Wandteile miteinander durch drei Textilbänder, Nähte, Klebestreifen (z.B. aus Papier) oder mit Metallklammern zu verbinden. Die so miteinander verbundenen Wandteile werden durch Biegen entlang der Ränder der Wandteile zu einer Röhre, die die zu schützende Pflanze umgibt, verformt (gebogen). Dann wird die Röhre mit Hilfe der Steckverbindung(en) zu einem vierseitigen, die zu schützende Pflanze umgebenden, Prisma geschlossen.

Sinngemäßes gilt für einen Pflanzenschutz in Form eines dreiseitigen Prismas, das drei Wandteile umfasst.

Im Rahmen der Erfindung ist auch eine Ausführungsform des Pflanzenschutzes in Betracht gezogen, bei der alle aneinandergrenzenden Ränder von Wandteilen durch Klebestreifen, Textilbänder, Nähte oder Metallklammern verbunden sind, so dass der erfindungsgemäße Pflanzenschutz von vornherein in Form einer geschlossenen Röhre vorliegt.

Im Rahmen der Erfindung ist auch eine Ausführungsform des Pflanzenschutzes in Betracht gezogen, bei der alle aneinandergrenzenden Ränder von Wandteilen durch schließbare Verbindungen, wie Steckverbindungen, verbunden sind. Bei dieser Ausführungsform wird der Pflanzenschutz beispielsweise um die zu schützende Pflanze (beispielsweise ein Baum) herum angebracht, indem die Wandteile vor Ort miteinander, beispielsweise durch Steckverbindungen, miteinander verbunden werden.

An dem erfindungsgemäßen Pflanzenschutz kann wenigstens eine Stabhalterung ("Pflockhalterung") vorgesehen sein. Mit dieser Stabhalterung kann der erfindungsgemäße Pflanzenschutz vor Verfrachtung durch Wind gesichert werden, indem der Pflanzenschutz über einen in dem Boden verankerten, z.B. in den Boden gerammten, Stab oder Stock gesteckt wird.

Wenn die Stabhalterung, wie in einer Ausführungsform der Erfindung vorgesehen, von einem Streifen, der mit aneindergrenzenden Wandteilen verbunden ist, gebildet wird, ergibt sich der Vorteil, dass zusätzlich die Form der Röhre gesichert ist. Das gilt beispielsweise für Röhren des erfindungsgemäßen Pflanzenschutzes aus vier oder mehr als vier Wandteilen.

Bestandteile des erfindungsgemäßen Pflanzenschutzes, wie plattenförmige Wandteile und Stabhalterungen, können in Form einer Platte bereitgestellt werden, wobei das Heraustrennen der Teile des Pflanzenschutzes aus der Platte durch (beispielsweise gestanzte) Schwächungslinien vorbereitet ist.

Beispielsweise kann beim Herstellen des erfindungsgemäßen Pflanzenschutzes wie folgt beschrieben vorgegangen werden:
Es werden Platten (Großformatplatten) aus Naturfasern hergestellt, indem Naturfasern mit oder ohne Zusatz von Bindemitteln, gegebenenfalls in Gegenwart von Feuchtigkeit, zu Platten verpresst werden.

Die Großformatplatten werden bei einer Kleinserienfertigung auf das Fertigformat zugeschnitten und händisch in eine CNC-Maschine gelegt. In der CNC-Maschine werden beispielsweise in einem Durchgang 10 Stück Großformatplatten stapelweise bearbeitet. Hierbei werden alle benötigten Ausnehmungen, Fräsungen und Perforierungen vorgenommen. Im Anschluss werden die einzelnen Pflanzenschutz-Rohlinge (Wandteile usw.) mit einer (Formatkreis-)Säge längsseitig drei- oder viergeteilt (je nach Dreieck- oder Viereckform des Pflanzenschutzes). Im folgenden Schritt wird entlang der Schnittfugen ein Papierklebeband (oder ein anderes Verbindungsmittel, wie z.B. Metallklammern) aufgebracht. Schlussendlich wird der fertige, zusammengesetzte, aber noch offene Pflanzenschutz auf einer Palette abgestapelt.

Bei einer Serienfertigung wird die Großformatplatte ebenfalls auf das Fertigformat zugeschnitten. Danach wird die einen Rohling bildende Großformatplatte in eine Stanze transportiert, die Ausnehmungen und Perforierungen werden herausgestanzt und gleichzeitig werden die "Schnittfugen" gestanzt. Die so vorbereiteten Platten werden zu einem Automaten transportiert, wo wenigstens ein Papierklebeband oder ein anderes Mittel (Textilband, Naht, Metallklammer) zum Verbinden der Wandteile aufgebracht wird. Der fertige, aber noch offene Pflanzenschutz wird automatisch abgestapelt und versandfertig gemacht.

Der erfindungsgemäße Pflanzenschutz besteht aus mehreren, beispielsweise drei oder vier, Wandteilen. Die Wandteile sind im Bereich einer Kante der Röhre des Pflanzenschutzes miteinander durch eine Verbindung, wie eine Steckverbindung, verbunden. Im Bereich der anderen, beispielsweise drei oder zwei, Kanten der Röhre des Pflanzenschutzes sind die Wandteile miteinander zueinander schwenkbar, beispielsweise mit Hilfe von Klebestreifen, Textilbändern, Nähten oder Metallklammern, verbunden. Diese Ausführungsform des erfindungsgemäßen Pflanzenschutzes erlaubt es, drei oder vier Wandteile miteinander zu verbinden, den so erhaltenen Körper zu der Röhre des Pflanzenschutzes zu verformen und dann die freien Ränder der endständigen Wandteile miteinander zum Schließen der Röhre des Pflanzenschutzes, beispielsweise durch wenigstens eine Steckverbindung, zu verbinden.

Durch die im Bereich wenigstens einer Kante vorgesehene (formschlüssige) Verbindung, wie eine Steckverbindung, erhält die Röhre des Pflanzenschutzes die für den Gebrauch ausreichende Stabilität, obwohl die Wandteile im Bereich der anderen Kanten der Röhre des Pflanzenschutzes miteinander beweglich verbunden sind.

In einer beispielhaften Ausführungsform kann der erfindungsgemäße Pflanzenschutz, dadurch gekennzeichnet sein, dass die Wandteile eine im Wesentlichen rechteckige Form aufweisen.

In einer beispielhaften Ausführungsform kann der erfindungsgemäße Pflanzenschutz, dadurch gekennzeichnet sein, dass wenigstens einer der Wandteile eben ist.

In einer beispielhaften Ausführungsform kann der erfindungsgemäße Pflanzenschutz, dadurch gekennzeichnet sein, dass wenigstens einer der Wandteile gekrümmt ist, wobei die Achse der Krümmung im Inneren der Röhre und parallel zur Längserstreckung der Röhre verläuft.

In einer beispielhaften Ausführungsform kann der erfindungsgemäße Pflanzenschutz, dadurch gekennzeichnet sein, dass die Wand der Röhre ausschließlich ebene oder ausschließlich gekrümmte Wandteile umfasst.

In einer beispielhaften Ausführungsform kann der erfindungsgemäße Pflanzenschutz, dadurch gekennzeichnet sein, dass die Wand der Röhre wenigstens drei ebene Wandteile umfasst und im Wesentlichen die Form des Mantels eines Prismas, insbesondere eines drei- oder vierseitigen Prismas, hat.

In einer beispielhaften Ausführungsform kann der erfindungsgemäße Pflanzenschutz, dadurch gekennzeichnet sein, dass die Wand der Röhre wenigstens zwei gekrümmte Wandteile umfasst.

In einer beispielhaften Ausführungsform kann der erfindungsgemäße Pflanzenschutz, dadurch gekennzeichnet sein, dass die Wand der Röhre ebene Wandteile und gekrümmte Wandteile umfasst.

In einer beispielhaften Ausführungsform kann der erfindungsgemäße Pflanzenschutz, dadurch gekennzeichnet sein, dass Wandteile an parallel zur Längserstreckung der Röhre verlaufenden und aneinandergrenzenden Rändern miteinander verklebt oder miteinander mit Hilfe von Klebestreifen, insbesondere aus Papier, mit Hilfe an den Wandteilen befestigter Textilbänder, mit Hilfe von Nähten oder mit Hilfe von Metallklammern verbunden sind.

In einer beispielhaften Ausführungsform kann der erfindungsgemäße Pflanzenschutz, dadurch gekennzeichnet sein, dass Wandteile an wenigstens einem parallel zur Längserstreckung der Röhre verlaufenden und aneinandergrenzenden Rand miteinander mit Hilfe von wenigstens einer Steckverbindung verbunden sind.

In einer beispielhaften Ausführungsform kann der erfindungsgemäße Pflanzenschutz, dadurch gekennzeichnet sein, dass Wandteile an zwei parallel zur Längserstreckung der Röhre verlaufenden und aneinandergrenzenden Rändern miteinander mit Hilfe der Steckverbindung und an den anderen aneinandergrenzenden Rändern miteinander mit Hilfe von Klebestreifen, Textilbändern, Nähten oder mit Hilfe von Metallklammern verbunden sind.

In einer beispielhaften Ausführungsform kann der erfindungsgemäße Pflanzenschutz, dadurch gekennzeichnet sein, dass die Wandteile an allen parallel zur Längserstreckung der Röhre verlaufenden und aneinandergrenzenden Rändern miteinander mit Hilfe von Steckverbindungen verbunden sind.

In einer beispielhaften Ausführungsform kann der erfindungsgemäße Pflanzenschutz, dadurch gekennzeichnet sein, dass die Wandteile an allen parallel zur Längserstreckung der Röhre verlaufenden und aneinandergrenzenden Rändern miteinander verklebt oder miteinander mit Hilfe von Klebestreifen, insbesondere aus Papier, mit Hilfe an den Wandteilen befestigten Textilbändern, mit Hilfe von Nähten oder mit Hilfe von Metallklammern verbunden sind.

In einer beispielhaften Ausführungsform kann der erfindungsgemäße Pflanzenschutz, dadurch gekennzeichnet sein, dass an der Innenseite des Pflanzenschutzes eine Stabhalterung vorgesehen ist.

In einer beispielhaften Ausführungsform kann der erfindungsgemäße Pflanzenschutz, dadurch gekennzeichnet sein, dass die Stabhalterung einen Raum umfasst, der zum Innenraum des Pflanzenschutzes hin durch einen Streifen, der an dem Pflanzenschutz festgelegt ist, begrenzt ist.

In einer beispielhaften Ausführungsform kann der erfindungsgemäße Pflanzenschutz, dadurch gekennzeichnet sein, dass der Raum der Stabhalterung nach außen hin von Wandteilen des Pflanzenschutzes begrenzt ist.

In einer beispielhaften Ausführungsform kann der erfindungsgemäße Pflanzenschutz, dadurch gekennzeichnet sein, dass der Streifen durch Löcher, die in den Wandteilen vorgesehen sind, greift.

In einer beispielhaften Ausführungsform kann der erfindungsgemäße Pflanzenschutz, dadurch gekennzeichnet sein, dass der Streifen zwei einseitig offene Schlitze aufweist und dass die Enden der Löcher in den Schlitzen aufgenommen sind.

In einer beispielhaften Ausführungsform kann der erfindungsgemäße Pflanzenschutz, dadurch gekennzeichnet sein, dass die Wandteile biologisch abbaubar sind.

In einer beispielhaften Ausführungsform kann der erfindungsgemäße Pflanzenschutz, dadurch gekennzeichnet sein, dass die Wandteile, die Sicherungsplättchen und/oder die Streifen aus mit oder ohne Zusatz von Bindemittel gepressten Pflanzenfasern, insbesondere aus bindemittelfrei gepressten Holzfasern und/oder Holzspänen, bestehen.

In einer beispielhaften Ausführungsform kann der erfindungsgemäße Pflanzenschutz, dadurch gekennzeichnet sein, dass die Steckverbindung eine Zunge und einen Schlitz umfasst und dass die Lage der durch den Schlitz gesteckten Zunge durch eine Sicherung gesichert ist.

In einer beispielhaften Ausführungsform kann der erfindungsgemäße Pflanzenschutz, dadurch gekennzeichnet sein, dass die Sicherung ein Sicherungsplättchen ist, das durch eine schlitzförmige Öffnung in der Zunge gesteckt ist.

In einer beispielhaften Ausführungsform kann der erfindungsgemäße Pflanzenschutz, dadurch gekennzeichnet sein, dass das Sicherungsplättchen an seinen im Bereich der Enden der Öffnung liegenden Rändern je eine Aussparung aufweist.

In einer beispielhaften Ausführungsform kann der erfindungsgemäße Pflanzenschutz, dadurch gekennzeichnet sein, dass das Sicherungsplättchen im Wesentlichen trapezförmig ist.

In einer beispielhaften Ausführungsform kann der erfindungsgemäße Pflanzenschutz, dadurch gekennzeichnet sein, dass zwischen Wandteilen keilförmige Nuten, die in der die Innenseite des Pflanzenschutzes bildenden Fläche liegen, vorgesehen sind.

In einer beispielhaften Ausführungsform kann der erfindungsgemäße Pflanzenschutz, dadurch gekennzeichnet sein, dass die Steckverbindung Sicherungsscheiben umfasst.

In einer beispielhaften Ausführungsform kann der erfindungsgemäße Pflanzenschutz, dadurch gekennzeichnet sein, dass die Sicherungsscheiben einen Einschnitt und diesem diametral gegenüberliegend einen Vorsprung aufweisen.

In einer beispielhaften Ausführungsform kann der erfindungsgemäße Pflanzenschutz, dadurch gekennzeichnet sein, dass die Sicherungsscheiben einen weiteren Vorsprung als Handhabe zum Verdrehen aufweisen.

Weitere Einzelheiten, Merkmale und Vorteile des erfindungsgemäßen Pflanzenschutzes ergeben sich aus der nachstehenden Beschreibung von Ausführungsbeispielen. Es zeigt:
- Fig. 1: in Schrägansicht einen Pflanzenschutz in Form eines vierseitigen Prismas mit Pflock,
- Fig. 2: in Seitenansicht den Pflanzenschutz aus Fig. 1,
- Fig. 3: in Draufsicht den Pflanzenschutz aus Fig. 1,
- Fig. 4: in einer anderen Schrägansicht den Pflanzenschutz aus Fig. 1 ohne Pflock
- Fig. 5: eine Einzelheit des Pflanzenschutzes aus Fig. 1
- Fig. 6: eine Platte mit den Bestandteilen des Pflanzenschutzes aus Fig. 1,
- Fig. 7: in Schrägansicht einen Pflanzenschutz in Form eines dreiseitigen Prismas mit Pflock,
- Fig. 8: in Seitenansicht den Pflanzenschutz aus Fig. 7,
- Fig. 9: in Draufsicht den Pflanzenschutz aus Fig. 7,
- Fig. 10: eine Platte mit den Bestandteilen des Pflanzenschutzes aus Fig. 7,
- Fig. 11: einen Ausschnitt aus zwei miteinander durch ein Textilband verbundenen Wandteilen,
- Fig. 12: einen Ausschnitt aus zwei miteinander durch ein angenähten Textilband verbundenen Wandteilen,
- Fig. 13: einen Ausschnitt aus zwei miteinander durch eine Naht verbundenen Wandteilen,
- Fig. 14: eine alternative Ausführungsform der Platte mit Bestandteilen des Pflanzenschutzes,
- Fig. 15: im Schnitt ein Detail zu Fig. 14,
- Fig. 16: eine alternative Ausführungsform eines Sicherungsplättchens,
- Fig. 17: ein eingesetztes Sicherungsplättchen gemäß Fig. 16 und
- Fig. 18: das eingesetzte Sicherungsplättchen in anderer Ansicht.

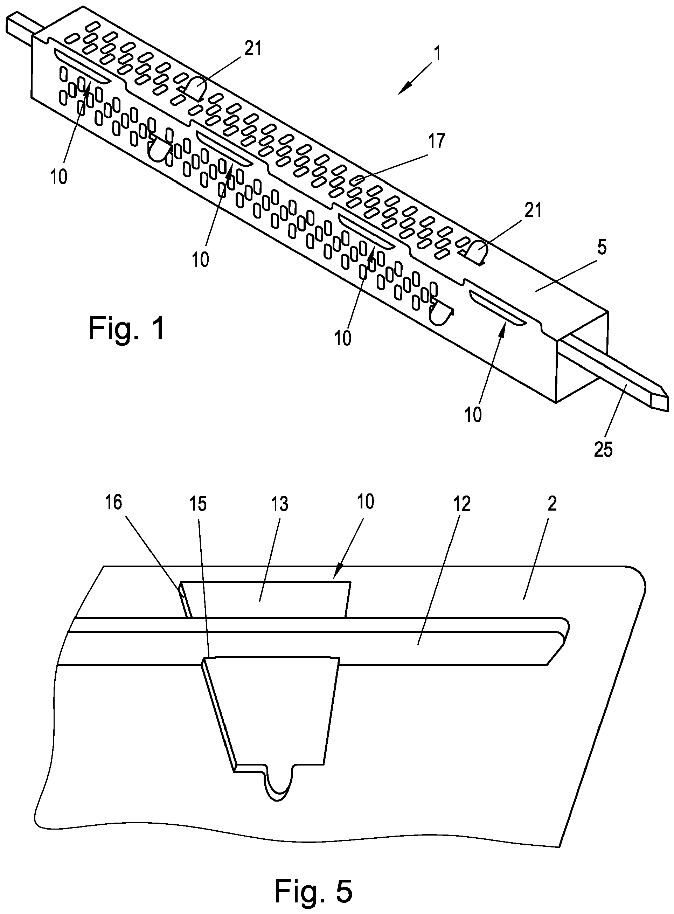

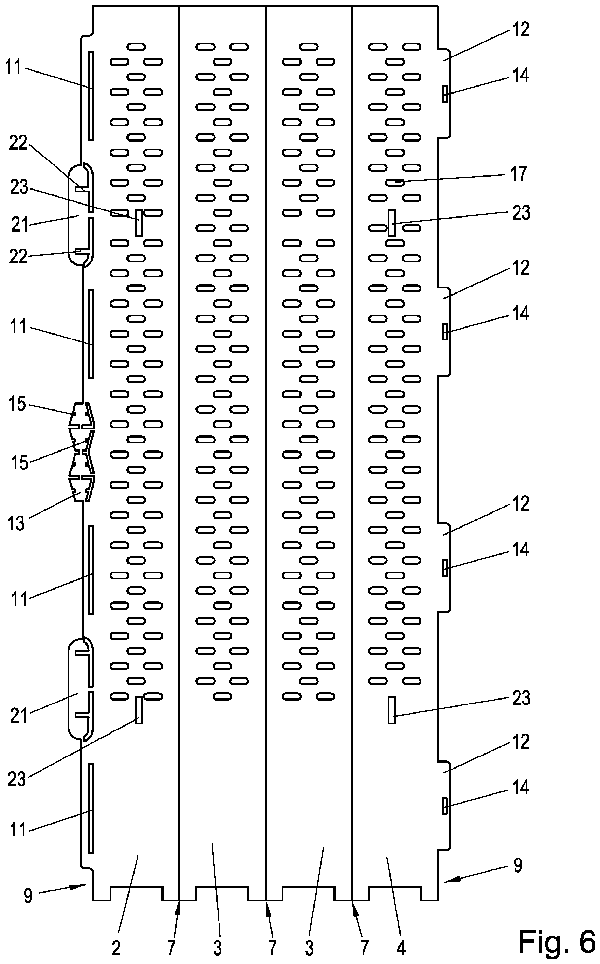

Ein in den Fig. 1 bis 5 gezeigter Pflanzenschutz 1 besitzt die Form einer Röhre 5 mit der Form eines vierseitigen Prismas und umfasst einen in Fig. 6 gezeigten, endständigen Wandteil 2, zwei mittlere Wandteile 3 und einen weiteren endständigen Wandteil 4.

Die Wandteile 2 bis 4 des erfindungsgemäßen Pflanzenschutzes 1 sind im Wesentlichen rechteckig und können eben oder gekrümmt sein.

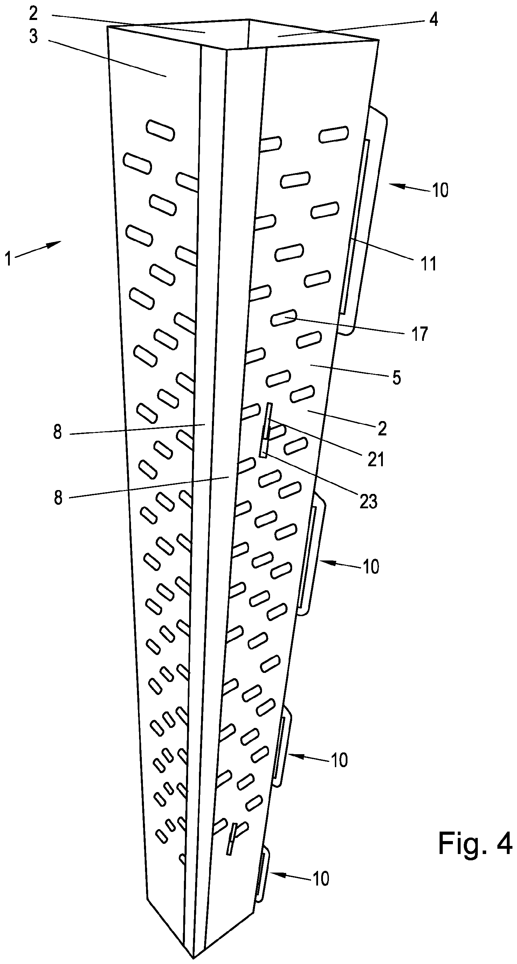

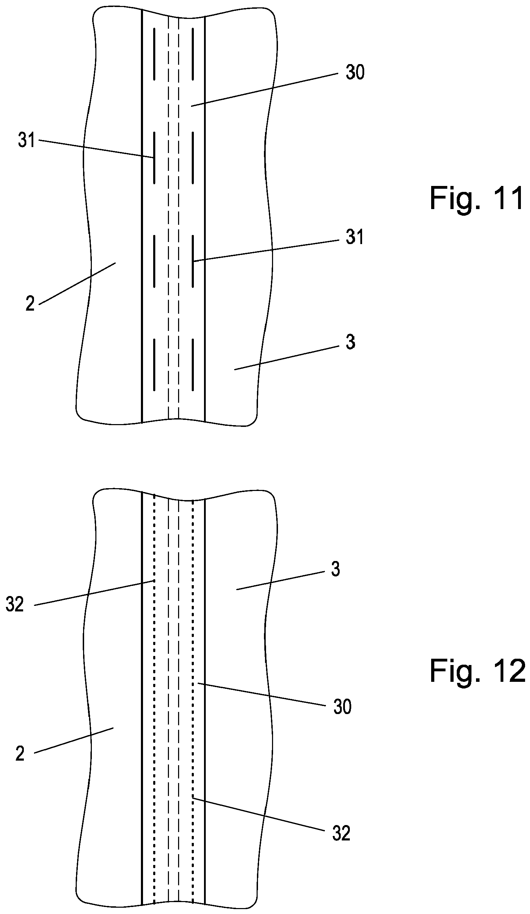

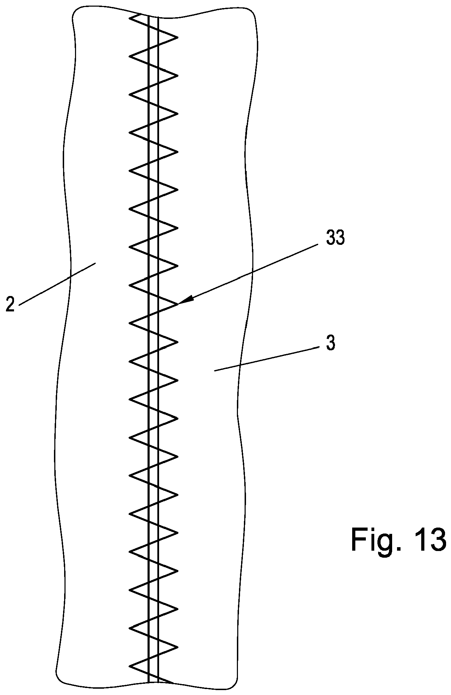

Die Wandteile 2 bis 4 werden entlang der aneinandergrenzenden Ränder (in Fig. 6 gekennzeichnet durch die Pfeile 7) miteinander so verbunden, dass es möglich ist, die miteinander verbundenen Wandteile 2 bis 4 zu einer Röhre 5 (Fig. 1) mit der Form des Mantels eines vierseitigen Prismas zu biegen. Die Verbindung kann mit Hilfe von Klebestreifen 8 (Fig. 4), z.B. aus Papier, mit Hilfe von Textilbändern 30 (Fig. 11 und 12), Nähten (Fig. 13) oder mit Hilfe von Metallklammern, wie Stahlklammern, erfolgen.

Wenn Textilbänder 30, wie Gewebebänder oder Filzbänder, verwendet werden, ist im Rahmen der Erfindung in Betracht gezogen, das Gewebeband an den Randbereichen aneinandergrenzender, plattenförmiger Wandteile 2 bis 4 zu befestigen. Das Befestigen der Textilbänder 30 kann durch Ankleben, Annähen und/oder mit Hilfe von Heftklammern erfolgen.

Wenn aneinandergrenzende Wandteile 2 bis 4 miteinander durch Nähte 32 verbunden werden, ist in Betracht gezogen, die die Nähte 32 bildenden Fäden (Garne) so zu verwenden, dass sich die Fäden in die Randbereiche aneinandergrenzender Ränder der Wandteile 2 bis 4 erstrecken. Insbesondere sind die Nähte Zick-Zack-Nähte.

In den Wandteilen 2 bis 4 sind Öffnungen 17 vorgesehen, die im Ausführungsbeispiel als quer zu der Längserstreckung des Pflanzenschutzes 1 ausgerichtete Schlitze ausgebildet sind. Andere Formen der Öffnungen 17 sind ebenfalls in Betracht gezogen.

Die endständigen, nicht durch Klebestreifen 8 oder andere Mittel, wie Textilbänder, Nähte, Metallklammern, Draht, Seil oder Schnur, miteinander verbundenen, also zunächst noch freien Ränder (in Fig. 6 gekennzeichnet durch Pfeile 9), werden miteinander durch wenigstens eine Steckverbindung 10, beispielsweise zwei, drei oder vier Steckverbindungen 10 verbunden, so dass eine Röhre 5 (Fig. 1) vorliegt.

Im Rahmen der Erfindung ist in Betracht gezogen, dass auch die zunächst noch freien Ränder der endständigen, plattenförmigen Wandteile 2 und 4 miteinander mit Hilfe von Mitteln (Klebestreifen 8, Textilbänder 30, Nähte, Metallklammern), die auch zum Verbinden der Wandteile 2 bis 4 verwendet werden, verbunden werden.

Die Steckverbindungen 10 umfassen an einem Rand des Wandteils 2 vorgesehene Schlitze 11 und an einem Rand des Wandteils 4 vorgesehene Zungen 12. In der Schließstellung sind die Zungen 12 durch die Schlitze 11 gesteckt. Zusätzlich sind Sicherungsplättchen 13 vorgesehen, die zum Sichern der Steckverbindungen 10 durch schlitzförmige Öffnungen 14 in den Zungen 12 gesteckt sind. Dies ist in Fig. 5 gezeigt. Aus Fig. 5 ist insbesondere zu entnehmen, dass die Sicherungsplättchen 13 etwa trapezförmig sind und an ihren Schrägrändern 16 Aussparungen 15 (beispielsweise Kerben) aufweisen. Wie Fig. 5 zeigt, rasten die Enden der schlitzförmigen Öffnungen 14 bei richtig eingesetzten Sicherungsplättchen 13 in die Aussparungen 15 an den Schrägrändern 16 der Sicherungsplättchen 13 ein. So ist durch die Sicherungsplättchen 13 sichergestellt, dass die Zungen 12 nicht aus den Schlitzen 11 herausrutschen können, eine Steckverbindung 10 unerwünscht geöffnet und der Pflanzenschutz 1 aus seiner eine Pflanze schützenden Lage, beispielsweise durch Wind, wegbewegt wird.

Der Pflanzenschutz 1 besitzt in einer möglichen Ausführungsform eine Stabhalterung 20 ("Pflockhalterung"). Die Stabhalterung 20 wird durch wenigstens einen Streifen 21 gebildet. Der Streifen 21 besitzt (vgl. Fig. 6) zwei einseitig offene Schlitze 22. Der Streifen 21 wird durch zwei schlitzartige Löcher 23, die parallel zur Längserstreckung des Pflanzenschutzes 1 ausgerichtet sind, gesteckt und dann so verschoben, dass die Enden der Löcher 23 in den einseitig offenen Schlitzen 22 des Streifens 21 aufgenommen sind. Üblicherweise werden die Streifen 21 so verschoben, dass in Gebrauchslage des Pflanzenschutzes 1 die unteren Enden der Löcher 23 in den einseitig - in der Gebrauchslage nach unten - offenen Schlitzen 22 aufgenommen sind.

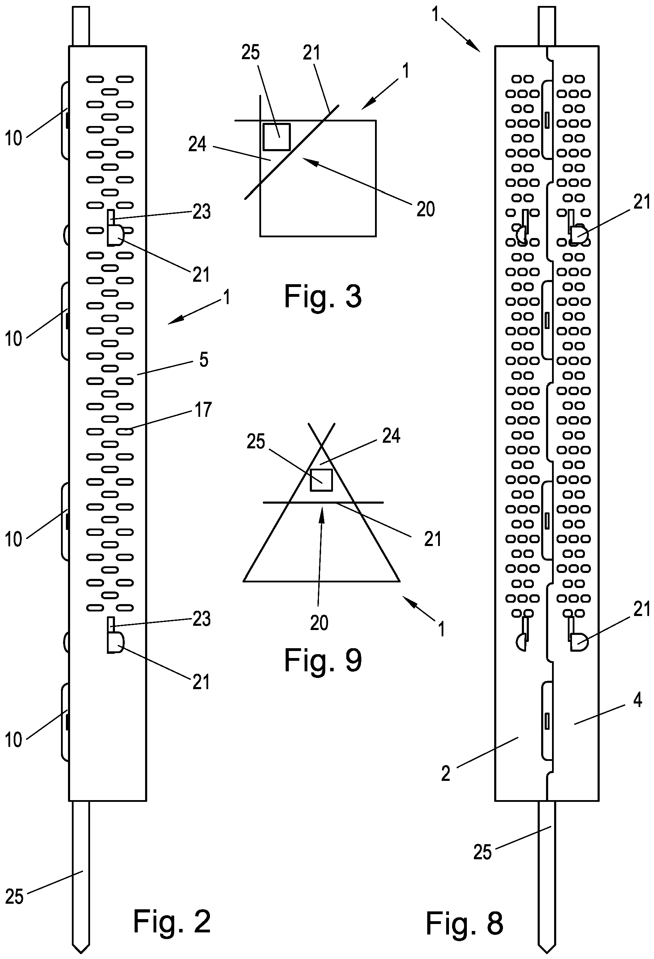

In dem durch zwei Wandteile 2 und 4 und durch die Streifen 21 begrenzten Raum 24 (Fig. 3 und Fig. 9) kann ein Stab 25 oder ein Pflock aufgenommen sein, wie das beispielsweise Fig. 3 (oder Fig. 9) zeigt. Die Stabhaltung 20 mit dem Streifen 21 hat auch den Effekt, die Form der Röhre 5 des Pflanzenschutzes 1 zu stabilisieren, auch wenn dieser die Form eines Mantels eines vier- oder mehrseitigen Prismas hat.

Der Streifen 21 und der Stab 25 können aus dem gleichen Werkstoff (verpresste Naturfasern) wie die Wandteile 2, 3 und 4 bestehen.

In Fig. 6 ist eine Platte mit den Bestandteilen des Pflanzenschutzes 1, nämlich den Wandteilen 2, 3 und 4, den Sicherungsplättchen 13 und den Streifen 21, gezeigt. Die genannten Bestandteile des Pflanzenschutzes 1 sind noch miteinander durch, beispielsweise angestanzte, Schwächungslinien verbunden. Die Bestandteile des Pflanzenschutzes 1 werden voneinander getrennt, dann die Wandteile 2,3 und 4 entlang der mit den Pfeilen 7 gekennzeichneten Ränder miteinander durch Klebestreifen 8, Textilbänder 30 , Nähte oder Metallklammern verbunden, zu einer prismatischen Röhre 5 verformt (gebogen), schließlich die Steckverbindungen 10 geschlossen und die Steckverbindung 10 schlussendlich mit den Sicherungsplättchen 13 gesichert.

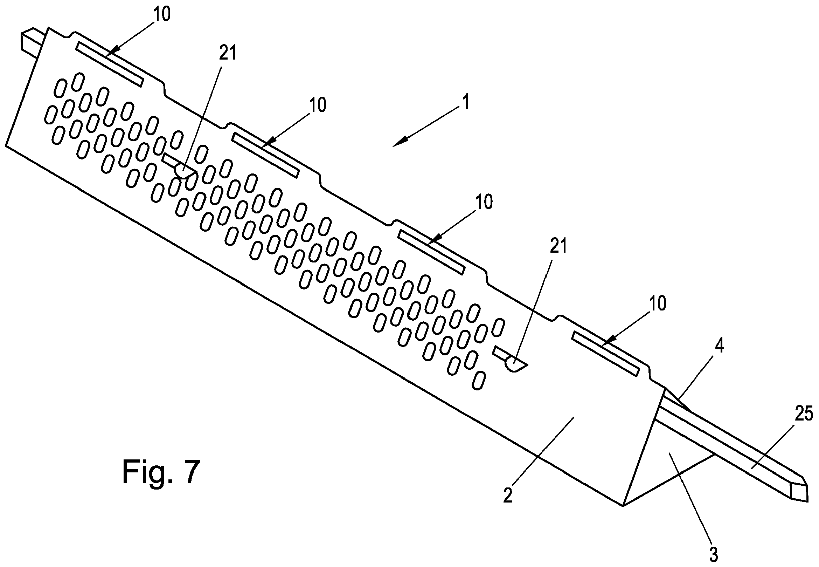

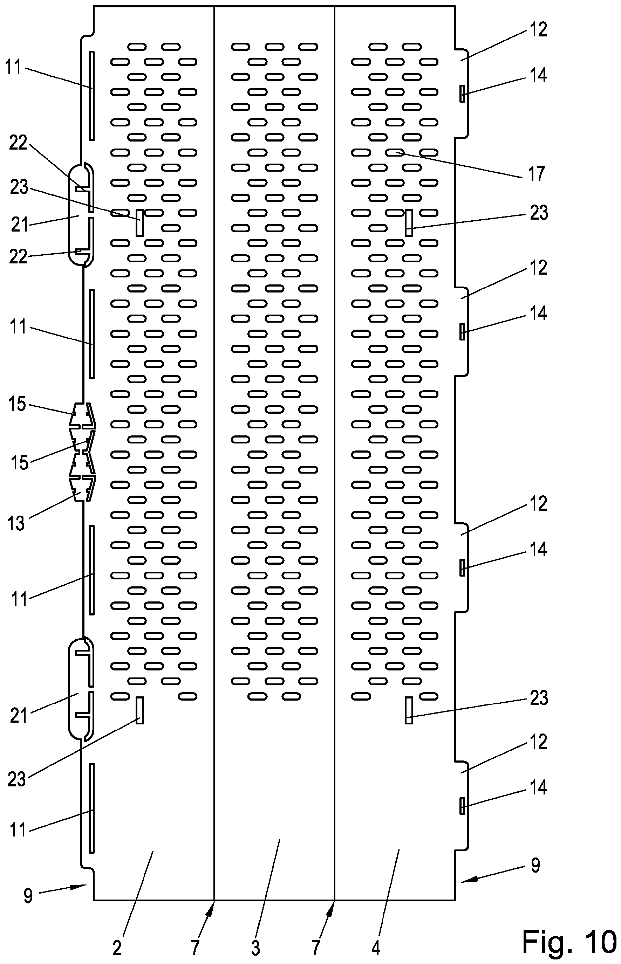

Die in den Fig. 7 bis 10 gezeigte Variante eines Pflanzenschutzes 1 mit einer Röhre 5 mit der Form des Mantels eines dreiseitigen Prismas umfasst einen endständigen Wandteil 2, einen mittleren Wandteil 3 und einen endständigen Wandteil 4.

Im Übrigen entspricht der Pflanzenschutz 1 der in den Fig. 7 bis 10 gezeigten Ausführungsform einschließlich der Steckverbindungen 10 und des eine Stabhalterung 20 bildenden Streifens 21 der mit Bezug auf die Fig. 1 bis 6 beschriebenen Ausführungsform des Pflanzenschutzes 1.

Das in Gebrauchslage untere Ende des Pflanzenschutzes 1 kann mit Füßen so ausgebildet sein, wie dies aus AT 11 447 U1 oder EP 2 324 699 A1 bekannt und in Fig. 6 angedeutet ist.

Fig. 11 zeigt beispielhaft eine Verbindung von zwei aneinandergrenzenden Wandteilen 2 und 3 mit Hilfe eines Textilbandes 30, das an den Wandteilen 2 und 3 im Bereich ihrer einander benachbarten Ränder (in Fig. 11 strichliert dargestellt) mit Heftklammern 31 befestigt ist.

Fig. 12 zeigt beispielhaft eine Verbindung von zwei aneinandergrenzenden Wandteilen 2 und 3 mit Hilfe eines Textilbandes 30, der an den Wandteilen 2 und 3 im Bereich der einander benachbarten Ränder der Wandteile 2 und 3 durch Nähte 32 befestigt ist.

Die Ausführungsformen der Fig. 11 und 12 schließen nicht aus, dass das Textilband 30 an den Wandteilen 2 und 3 ausschließlich (also ohne Naht oder Heftklammern) oder auch durch Ankleben befestigt ist.

Fig. 13 zeigt beispielhaft eine Ausführungsform, bei der zwei aneinandergrenzende Wandteile 2 und 3 miteinander durch eine Naht, im Beispiel eine Zick-Zack-Naht 33, verbunden sind. Andere Formen einer Naht sind ebenso verwendbar.

Bei allen Ausführungsformen des erfindungsgemäßen Pflanzenschutzes 1 kann die Innenseite der Röhre 5 mit einer lichtdurchlässigen (z.B. durchsichtigen) Folie und/oder mit einem Netz ausgekleidet sein. Bei dieser Ausführungsform des Pflanzenschutzes 1 ist verhindert, dass der Terminaltrieb der Pflanze durch die Öffnungen 17 in der Röhre 5 herauswächst. Zusätzlich ergibt sich insbesondere bei einer Folie ein Glashauseffekt, der das Wachsen der Pflanze fördert.

Wenn, wie im Rahmen der Erfindung beispielsweise vorgesehen, die Folie und das Netz aus einem (biologisch) abbaubaren Werkstoff bestehen, bauen sich das Netz und die Folie - nach einer bestimmten Zeit - ab und die Vorteile, nämlich Belüftung und verbessertes Wurzelwachstum des Pflanzenschutzes 1 mit Öffnungen 17 sind wieder gegeben.

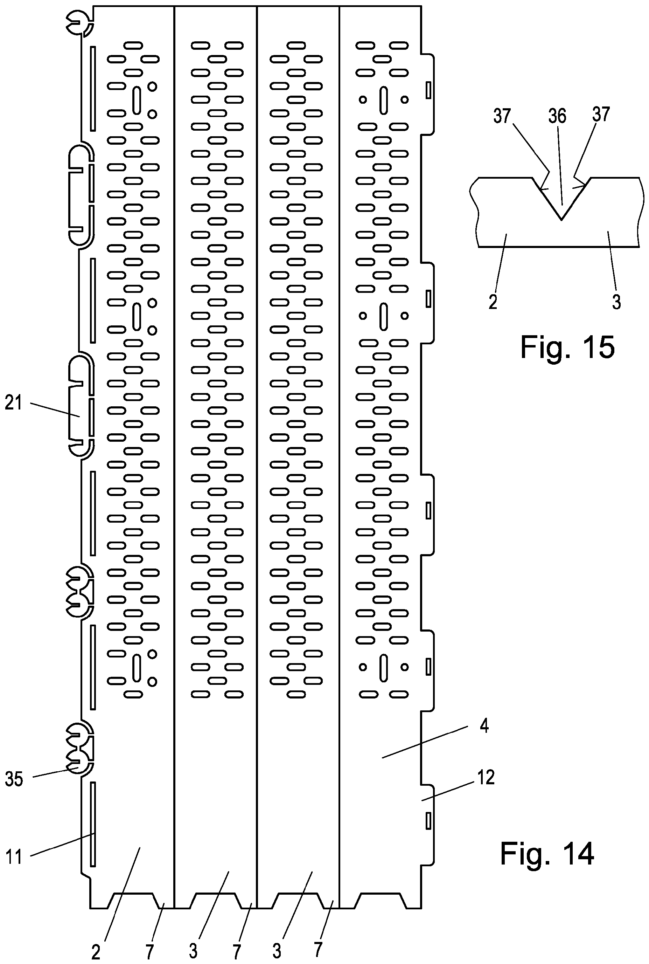

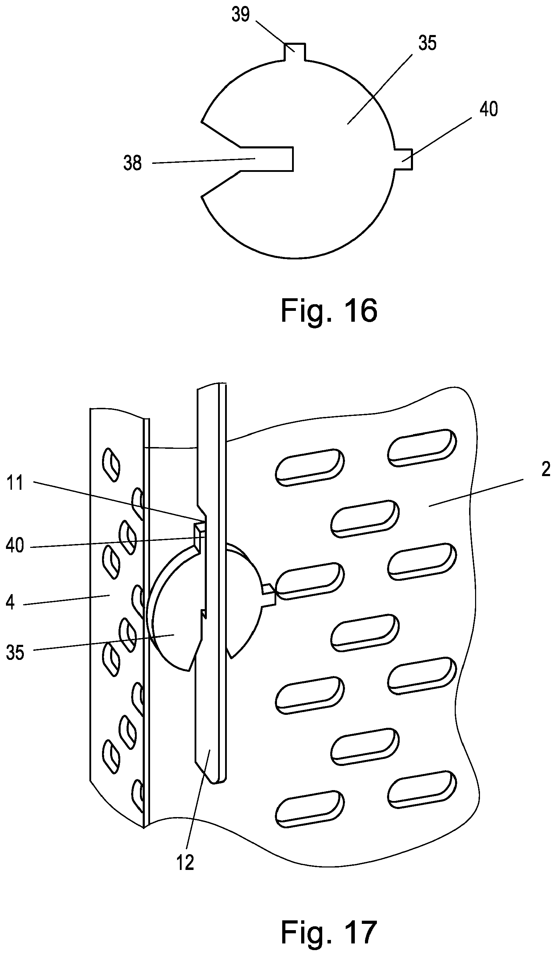

Die in Fig. 14 gezeigte Ausführungsform einer Platte mit den Bestandteilen des Pflanzenschutzes 1 umfasst die zwei endständigen Wandteile 2 und 4 und die zwei mittleren Wandteile 3. Weiters sind die Streifen 21 der Stabhalterungen 20 vorgesehen. Vorgesehen sind weiters an den äußeren Rändern der endständigen Wandteile 2 und 4 die Zungen 12 mit schlitzförmigen Öffnungen 14 und die Schlitze 11 für die Steckverbindungen 10, welche die freien Ränder der endständigen Wandteile 2 und 4 miteinander verbinden. Zum Sichern der Steckverbindungen 10 sind Sicherungsscheiben 35 mit im Wesentlichen kreisrunder Form vorgesehen. Die Sicherungsscheiben 35 werden an Hand der Fig. 16 bis 18 näher erläutert werden.

Bei der in Fig. 14 gezeigten Ausführungsform sind die Wandteile 2 bis 4 miteinander verbunden. Damit die Platte im Bereich der Kanten des Pflanzenschutzes 1 geknickt werden kann, sind an der die Innenseite des Pflanzenschutzes 1 bildenden Fläche im Querschnitt keilförmige Nuten 36 (Fig. 15) vorgesehen. Der Öffnungswinkel zwischen den Seitenflächen 37 der Nuten 36 kann in der Größenordnung von 50 bis 70°, insbesondere 60°, liegen.

Die Nuten 36 können durch abtragendes Bearbeiten der Platte oder durch Verdichten des Werkstoffes, aus dem die Platte besteht, hergestellt werden.

Die Ausbildung der Kanten mit Nuten 36 kann mit anderen Möglichkeiten, die Wandteile 2 bis 4 miteinander zu verbinden, kombiniert sein.

Die Sicherungsscheiben 35 sind im Wesentlichen kreisrund mit einem Einschnitt 38 und zwei Vorsprüngen 39, 40 ausgebildet. Die Vorsprünge 39 und 40 entstehen, wenn die Sicherungsscheiben 35 von der in Fig. 14 gezeigten Platte mit den Wandteilen 2 bis 4 und den Streifen 21 getrennt (abgebrochen) werden. Die Vorsprünge 39 und 40 haben die nachstehend erläuterten Vorteile.

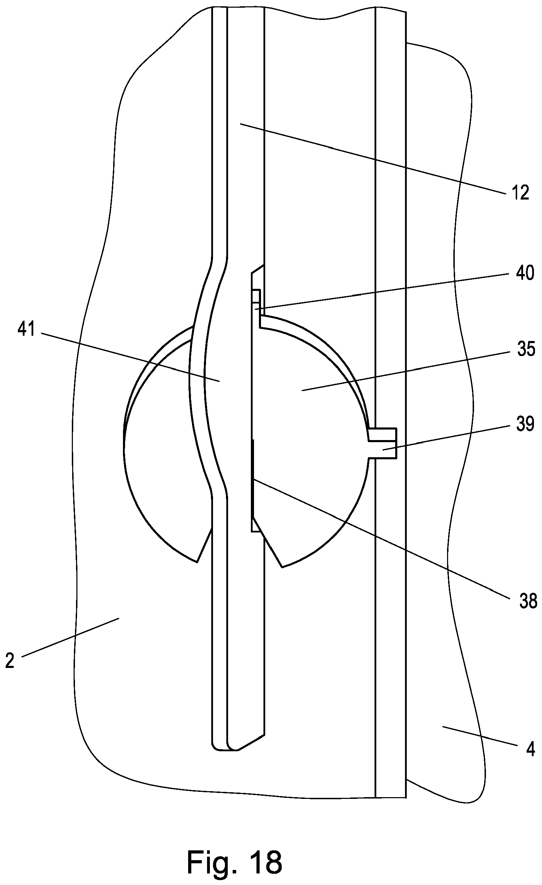

Der Einschnitt 38 ist an seinem offenen Ende sich erweiternd ausgebildet. Der eine Vorsprung 40 liegt dem Einschnitt 38 diametral gegenüber. Der Vorsprung 40 sichert die Sicherungsscheibe 35 in ihrer Wirkstellung, die in den Fig. 17 und 18 gezeigt ist. Der andere Vorsprung 39 dient als Handhabe beim Einsetzen der Sicherungsscheiben 35, wenn die Sicherungsscheiben 35 in ihre Wirkstellung verdreht werden. In der Wirkstellung durchgreifen die Sicherungsscheiben 35 die schlitzförmigen Öffnungen 14 in den Zungen 12, wobei der Einschnitt 38 rittlings auf einem Ende der schlitzförmigen Öffnungen 14 sitzt.

An dem freien Rand der Zungen 12 kann eine Lasche 41 vorgesehen sein (Fig. 18)

Zusammenfassend kann ein Ausführungsbeispiel der Erfindung wie folgt beschrieben werden:
Ein Pflanzenschutz 1 umfasst vier Wandteile 2, 3 und 4, die miteinander zu einer Röhre 5 mit der Form des Mantels eines Prismas verbunden sind. Dabei sind bis auf eine Kante des Pflanzenschutzes 1 die Wandteile 2, 3 und 4 miteinander so verbunden, dass die Wandteile 2, 3 und 4 relativ zueinander schwenkbar sind, um die Röhre 5 zu bilden. Die in der anderen Kante des Pflanzenschutzes 1 aneinandergrenzenden, zunächst noch nicht miteinander verbundenen Ränder der Wandteile 2 und 4 sind miteinander mit Hilfe von Steckverbindungen 10 verbunden. Die Wandteile 2, 3 und 4 und die anderen Bestandteile des Pflanzenschutzes können aus bevorzugt bindemittelfrei gepressten Holzfasern und/oder Holzspänen bestehen.

## Patentansprüche

1. Pflanzenschutz (1) in Form einer Röhre (5), **dadurch gekennzeichnet, dass** die Wand der Röhre (5) plattenförmige Wandteile (2, 3, 4) umfasst und dass die Wandteile (2, 3, 4) an ihren parallel zur Längserstreckung der Röhre (5) verlaufenden Rändern miteinander verbunden sind.

2. Pflanzenschutz nach Anspruch 1, **dadurch gekennzeichnet, dass** die Wand der Röhre (5) wenigstens drei ebene Wandteile (2, 3, 4) umfasst und im Wesentlichen die Form des Mantels eines Prismas, insbesondere eines drei- oder vierseitigen Prismas, hat.

3. Pflanzenschutz Anspruch 1 oder 2, **dadurch gekennzeichnet, dass** Wandteile (2, 3, 4) an parallel zur Längserstreckung der Röhre (5) verlaufenden und aneinandergrenzenden Rändern miteinander verklebt oder miteinander mit Hilfe von Klebestreifen (8), insbesondere aus Papier, mit Hilfe an den Wandteilen (2, 3, 4) befestigter Textilbänder (30), mit Hilfe von Nähten oder mit Hilfe von Metallklammern verbunden sind.

4. Pflanzenschutz nach einem der Ansprüche 1 bis 3, **dadurch gekennzeichnet, dass** Wandteile (2, 3, 4) an wenigstens einem parallel zur Längserstreckung der Röhre (5) verlaufenden und aneinandergrenzenden Rand miteinander mit Hilfe von wenigstens einer Steckverbindung (10) verbunden sind.

5. Pflanzenschutz nach Anspruch 3, **dadurch gekennzeichnet, dass** die Wandteile (2, 3, 4) an allen parallel zur Längserstreckung der Röhre (5) verlaufenden und aneinandergrenzenden Rändern miteinander verklebt oder miteinander mit Hilfe von Klebestreifen (8), insbesondere aus Papier, mit Hilfe an den Wandteilen (2, 3, 4) befestigten Textilbändern (30), mit Hilfe von Nähten oder mit Hilfe von Metallklammern verbunden sind.

6. Pflanzenschutz nach einem der Ansprüche 1 bis 5, **dadurch gekennzeichnet, dass** an der Innenseite des Pflanzenschutzes (1) eine Stabhalterung (20) vorgesehen ist.

7. Pflanzenschutz nach Anspruch 6, **dadurch gekennzeichnet, dass** die Stabhalterung (20) einen Raum (24) umfasst, der zum Innenraum des Pflanzenschutzes (1) hin durch einen Streifen (21), der an dem Pflanzenschutz (1) festgelegt ist, begrenzt ist.

8. Pflanzenschutz nach Anspruch 7, **dadurch gekennzeichnet, dass** der Raum (24) der Stabhalterung (20) nach außen hin von Wandteilen (2 und 4) des Pflanzenschutzes (1) begrenzt ist.

9. Pflanzenschutz nach Anspruch 7 oder 8, **dadurch gekennzeichnet, dass** der Streifen (21) durch Löcher (23), die in den Wandteilen (2 und 4) vorgesehen sind, greift.

10. Pflanzenschutz nach Anspruch 9, **dadurch gekennzeichnet, dass** der Streifen (21) zwei einseitig offene Schlitze (22) aufweist und dass die Enden der Löcher (23) in den Schlitzen (22) aufgenommen sind.

11. Pflanzenschutz nach einem der Ansprüche 4 bis 10, **dadurch gekennzeichnet, dass** die Steckverbindung (10) eine Zunge (12) und einen Schlitz (11) umfasst und dass die Lage der durch den Schlitz (11) gesteckten Zunge (12) durch eine Sicherung gesichert ist.

12. Pflanzenschutz nach Anspruch 11, **dadurch gekennzeichnet, dass** die Sicherung ein Sicherungsplättchen (13) ist, das durch eine schlitzförmige Öffnung (14) in der Zunge (12) gesteckt ist.

13. Pflanzenschutz nach Anspruch 12, **dadurch gekennzeichnet, dass** das Sicherungsplättchen (13) an seinen im Bereich der Enden der Öffnung (14) liegenden Rändern (16) je eine Aussparung (15) aufweist.

14. Pflanzenschutz nach einem der Ansprüche 1 bis 13, **dadurch gekennzeichnet, dass** die Wandteile (2, 3, 4) biologisch abbaubar sind.

15. Pflanzenschutz nach Anspruch 14, **dadurch gekennzeichnet, dass** die Wandteile (2, 3, 4), die Sicherungsplättchen (13) und/oder die Streifen (21) aus mit oder ohne Zusatz von Bindemittel gepressten Pflanzenfasern, insbesondere aus bindemittelfrei gepressten Holzfasern und/oder Holzspänen, bestehen.

16. Pflanzenschutz nach einem der Ansprüche 1 bis 15, **dadurch gekennzeichnet, dass** zwischen Wandteilen (2, 3, 4) keilförmige Nuten (36), die in der die Innenseite des Pflanzenschutzes (1) bildenden Fläche liegen, vorgesehen sind.

17. Pflanzenschutz nach einem der Ansprüche 4 bis 16, **dadurch gekennzeichnet, dass** die Steckverbindung (10) Sicherungsscheiben (35) umfasst.

18. Pflanzenschutz nach Anspruch 17, **dadurch gekennzeichnet, dass** die Sicherungsscheiben (35) einen Einschnitt (38) und diesem diametral gegenüberliegend einen Vorsprung (40) aufweisen.

19. Pflanzenschutz nach Anspruch 17 oder 18, **dadurch gekennzeichnet, dass** die Sicherungsscheiben (35) einen weiteren Vorsprung (39) als Handhabe zum Verdrehen aufweisen.
